# EUROPEAN PATENT SPECIFICATION

(11) **EP 3 001 645 B1**
(45) Date of publication and mention of the grant of the patent: **28.11.2018**
(21) Application number: 14889731.7
(22) Date of filing: 18.04.2014
(51) Int. Cl.: H04L 29/08, H04W 4/12

(54) **METHOD FOR RECEIVING PUSH INFORMATION, AND RELATED APPARATUS AND SYSTEM**
VERFAHREN ZUM EMPFANGEN VON PUSH-INFORMATIONEN SOWIE ZUGEHÖRIGE VORRICHTUNG UND SYSTEM
PROCÉDÉ DE RÉCEPTION D'INFORMATIONS DE POUSSER AINSI QU'APPAREIL ET SYSTÈME ASSOCIÉS

(43) Date of publication of application: 30.03.2016
(73) Proprietor: Huawei Technologies Co., Ltd., Longgang District Shenzhen, Guangdong 518129 (CN)
(72) Inventor: YANG, Fen, Shenzhen Guangdong 518129 (CN); WANG, Zhihong, Shenzhen Guangdong 518129 (CN)
(74) Representative: Gill Jennings & Every LLP
(86) International application number: PCT/CN2014/075665
(87) International publication number: WO 2015/157986

(56) References cited:
- CN-A- 102 547 566
- CN-A- 102 695 136
- CN-A- 102 710 777
- US-A1- 2010 120 450
- US-A1- 2012 246 247
- US-A1- 2013 110 986

## Description

### TECHNICAL FIELD

The present invention relates to the field of communications technologies, and in particular, to a method for receiving push information and a related apparatus and system.

### BACKGROUND

With the development of wireless fidelity (Wi-Fi) technologies, an information push (Push) mechanism may be used in a Wi-Fi network. When a user visits a Wi-Fi login interface and logs in to a Wi-Fi server by using a terminal, an information pusher may push information to the Wi-Fi login interface. By using this method, accurate information push can be implemented, which, however, is limited only to information push on the Wi-Fi login interface. Once the user exits the Wi-Fi login interface, the information push cannot be implemented.

In order to implement real-time push by using the foregoing push manner, after the user enters user information, for example, a mobile phone number, on the Wi-Fi login interface to log in to the Wi-Fi server, the information pusher can acquire relevant information of the user according to the mobile phone number, and then can implement real-time push in a form similar to an SMS message by using the foregoing push manner. However, in this manner, the user needs to enter the user information each time the user logs in to one Wi-Fi server, and consequently a user information leakage range is excessively large.

US 2010/0120450 relates to location specific content. US 2012/0246247 relates to method, apparatus and system for information push service based on wireless LAN access point.

### SUMMARY

Embodiments of the present invention provide a method for receiving push information and a related apparatus and system, so as to implement information push on the basis of not leaking user information as far as possible, thereby preventing the information push from being greatly limited by a user operation.

A first aspect of the present invention provides a method for receiving push information, including:
receiving, by a terminal, information about a network access interface sent by a network access point, where the information about the network access interface includes address information of a push server and access information of a wireless local area network WLAN access hotspot, wherein the wireless local area network access hotspot is different from the network access point;
acquiring, by the terminal, the address information of the push server included in the information about the network access interface;
accessing, by the terminal, the WLAN access hotspot based on the access information of the WLAN access hotspot, and establishing a push connection channel between the terminal and the push server according to the address information of the push server by using the WLAN access hotspot; and
receiving, by the terminal by using the established push connection channel, push information sent by the push server.

With reference to the first aspect, in a first possible implementation manner, the receiving, by a terminal, information about a network access interface sent by a network access point includes: receiving, by the terminal, the information about the network access interface actively sent by the network access point to the terminal located in coverage of the network access point;
or,
the receiving, by a terminal, information about a network access interface sent by a network access point includes: after the terminal sends a network access interface acquiring request to the network access point, receiving, by the terminal, the information about the network access interface used to respond to the network access interface acquiring request and sent by the network access point.

With reference to the first aspect or the first possible implementation manner of the first aspect, in a second possible implementation manner of the first aspect,
the information about the network access interface includes hidden information and displayed information of the network access interface, where the hidden information includes the address information of the push server, where after the receiving, by a terminal, information about a network access interface sent by a network access point, the method further includes: displaying, by the terminal, the network access interface according to the information about the network access interface, where the displayed network access interface displays the displayed information.

With reference to the second possible implementation manner of the first aspect, in a third possible implementation manner of the first aspect, the displayed information includes an option label provided for a user to choose whether to connect to the push server.

With reference to the first aspect or the first possible implementation manner of the first aspect or the second possible implementation manner of the first aspect or the third possible implementation manner of the first aspect, in a fourth possible implementation manner of the first aspect, the accessing, by the terminal, the WLAN access hotspot based on the access information of the WLAN access hotspot, and establishing a push connection channel between the terminal and the push server according to the address information of the push server by using the WLAN access hotspot includes: when the terminal receives a first user instruction, accessing, by the terminal, the WLAN access hotspot based on the access information of the WLAN access hotspot, and establishing the push connection channel between the terminal and the push server according to the address information of the push server by using the WLAN access hotspot, where the first user instruction is used to instruct the terminal to access the wireless local area network access hotspot.

With reference to the first aspect or the first possible implementation manner of the first aspect or the second possible implementation manner of the first aspect or the third possible implementation manner of the first aspect, in a fifth possible implementation manner of the first aspect, the accessing, by the terminal, the WLAN access hotspot based on the access information of the WLAN access hotspot, and establishing a push connection channel between the terminal and the push server according to the address information of the push server by using the WLAN access hotspot includes: when the terminal receives a second user instruction, accessing the WLAN access hotspot based on the access information of the WLAN access hotspot, and establishing the push connection channel between the terminal and the push server according to the address information of the push server by using the WLAN access hotspot, where the second user instruction is used to instruct the terminal to connect to the push server.

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in a sixth possible implementation manner of the first aspect,
the establishing, by the terminal, a push connection channel between the terminal and the push server according to the address information of the push server by using the WLAN access hotspot includes: establishing, by a push client in the terminal, the push connection channel between the terminal and the push server according to the address information of the push server by using the WLAN access hotspot; and
the receiving, by the terminal by using the established push connection channel, push information sent by the push server includes: receiving, by the push client in the terminal by using the established push connection channel, the push information sent by the push server.

A second aspect of the present invention provides a terminal, including:
an interaction unit, configured to receive information about a network access interface sent by a network access point, where the information about the network access interface includes address information of a push server and access information of a wireless local area network WLAN access hotspot, wherein the wireless local area network access hotspot is different from the network access point;
an acquiring unit, configured to acquire the address information of the push server included in the information about the network access interface;
a channel establishing unit, configured to access the WLAN access hotspot based on the access information of the WLAN access hotspot, and establish a push connection channel between the terminal and the push server according to the address information of the push server by using the WLAN access hotspot; and
a transmitting unit, configured to receive, by using the established push connection channel, push information sent by the push server.

With reference to the second aspect, in a first possible implementation manner of the second aspect, the interaction unit is specifically configured to receive the information about the network access interface actively sent by the network access point to the terminal located in coverage of the network access point; or
the interaction unit is specifically configured to: after sending a network access interface acquiring request to the network access point, receive the information about the network access interface used to respond to the network access interface acquiring request and sent by the network access point.

With reference to the second aspect or the first possible implementation manner of the second aspect, in a second possible implementation manner of the second aspect,
the information about the network access interface includes hidden information and displayed information of the network access interface, and the hidden information includes the address information of the push server, where
the terminal further includes:
a display unit, configured to: after the interaction unit receives the information about the network access interface sent by the network access point, display the network access interface according to the information about the network access interface, where the displayed network access interface displays the displayed information.

With reference to the second possible implementation manner of the second aspect, in a third possible implementation manner of the second aspect, the displayed information includes an option label provided for a user to choose whether to connect to the push server.

With reference to the second aspect or the first possible implementation manner of the second aspect or the second possible implementation manner of the second aspect or the third possible implementation manner of the second aspect, in a fourth possible implementation manner of the second aspect, the channel establishing unit is specifically configured to: when the terminal receives a first user instruction, access, by the terminal, the WLAN access hotspot based on the access information of the WLAN access hotspot, and establish the push connection channel between the terminal and the push server according to the address information of the push server by using the WLAN access hotspot, where the first user instruction is used to instruct the terminal to access the wireless local area network access hotspot.

With reference to the second aspect or the first possible implementation manner of the second aspect or the second possible implementation manner of the second aspect or the third possible implementation manner of the second aspect, in a fifth possible implementation manner of the second aspect, the channel establishing unit is specifically configured to: when the terminal receives a second user instruction, access the WLAN access hotspot based on the access information of the WLAN access hotspot, and establish the push connection channel between the terminal and the push server according to the address information of the push server by using the WLAN access hotspot, where the second user instruction is used to instruct the terminal to connect to the push server.

A third aspect of the present invention provides an information push system, which may include:
a network access point, configured to send information about a network access interface to a terminal, where the information about the network access interface includes address information of a push server and access information of a wireless local area network WLAN access hotspot, wherein the wireless local area network access hotspot is different from the network access point;
the terminal, configured to receive the information about the network access interface sent by the network access point; acquire the address information of the push server included in the information about the network access interface; access the WLAN access hotspot based on the access information of the WLAN access hotspot; establish a push connection channel between the terminal and the push server according to the address information of the push server by using the WLAN access hotspot; and receive, by using the established push connection channel, push information sent by the push server; and
the push server, configured to: after the push connection channel between the push server and the terminal is established, send the push information to the terminal by using the established push connection channel.

With reference to the third aspect, in a first possible implementation manner, the terminal is any one of the terminals provided by the embodiments of the present invention.

A fourth aspect of the present invention provides a computer storage medium, where
the computer storage medium stores a program, and when the program runs, some or all steps of any one of the methods for receiving push information provided by the embodiments of the present invention are performed.

It can be seen that, in the technical solutions of the embodiments, after receiving information about a network access interface that is sent by a network access point and includes address information of a push server and access information of a WLAN access hotspot, a terminal acquires the address information of the push server included in the information about the network access interface, accesses the WLAN access hotspot based on the access information of the WLAN access hotspot, establishes a push connection channel between the terminal and the push server according to the acquired address information of the push server by using the WLAN access hotspot, and then receives, by using the established push connection channel, push information sent by the push server. In this way, because the terminal can acquire the address information of the push server from the received information about the network access interface, even if the terminal exits a display of the network access interface, the terminal can still establish the push connection channel between the terminal and the push server according to the acquired address information of the push server by using the WLAN access hotspot, and then receive information pushed by the push server, that is, a process of pushing information is not limited by the display of the network access interface operated by the user; and because the terminal can actively initiate establishment of the push connection channel between the terminal and the push server according to the address information of the push server, in the process of pushing information, the push server does not need to acquire user information to push information according to the user information. In conclusion, in the foregoing solutions of the embodiments of the present invention, information push can be implemented on the basis that user information does not need to be acquired, so that the information push is not limited by a user operation as far as possible, and possibility of leakage of the user information is decreased.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

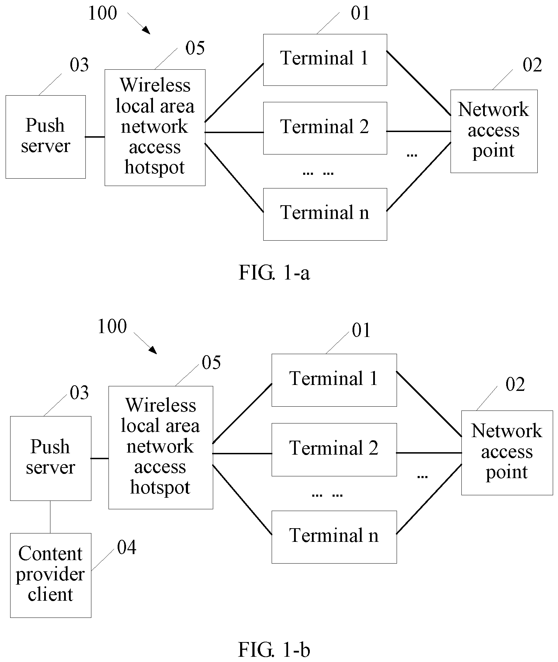

FIG. 1-a is a schematic structural diagram of an information push system according to an embodiment of the present invention;
FIG. 1-b is a schematic structural diagram of another information push system according to an embodiment of the present invention;
FIG. 2 is a flowchart of a method for receiving push information according to an embodiment of the present invention;
FIG. 3 is a flowchart of another method for receiving push information according to an embodiment of the present invention;
FIG. 4 is a flowchart of another method for receiving push information according to an embodiment of the present invention;
FIG. 5-a is a schematic structural diagram of a terminal according to an embodiment of the present invention;

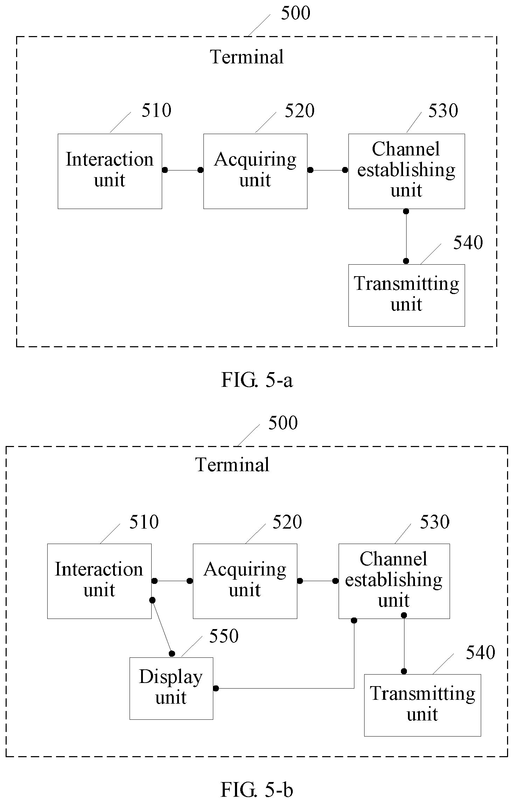

FIG. 5-b is a schematic structural diagram of another terminal according to an embodiment of the present invention;

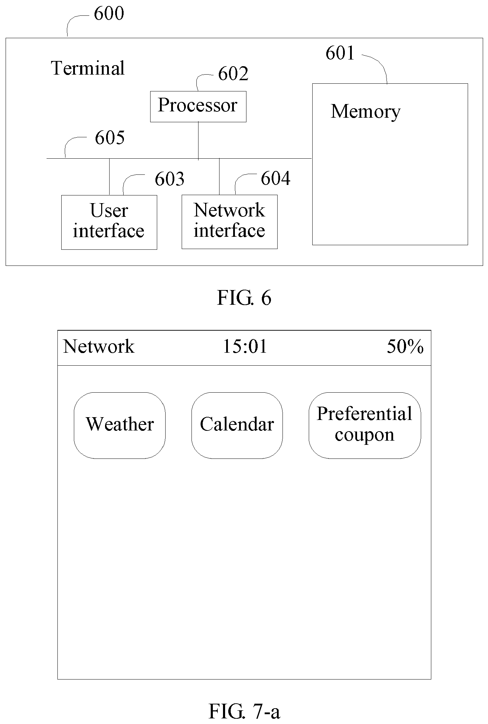

FIG. 6 is a schematic structural diagram of another terminal according to an embodiment of the present invention;

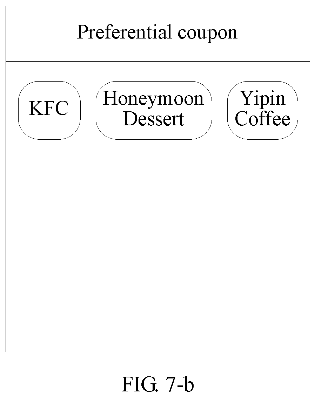

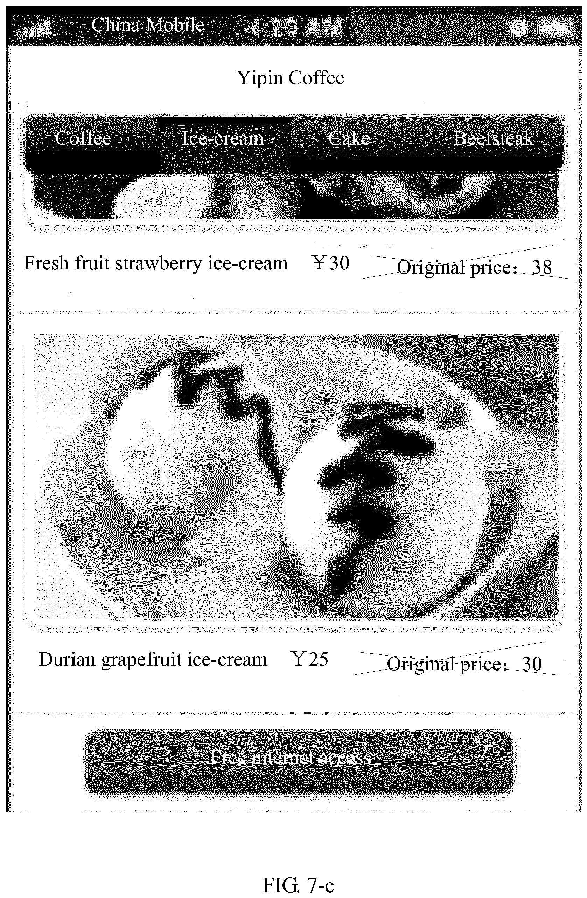

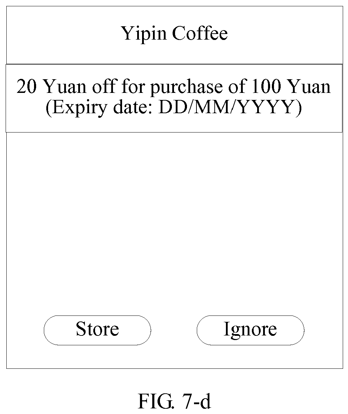

FIG. 7-a is a schematic diagram of a type of network access interface displayed on a terminal according to an embodiment of the present invention;
FIG. 7-b is a schematic diagram of a particular type of network access interface displayed on a terminal according to an embodiment of the present invention;
FIG. 7-c is a schematic diagram of a network access interface displayed on a terminal according to an embodiment of the present invention; and
FIG. 7-d is a schematic diagram of received push information that is pushed by a push server to a terminal and displayed on the terminal according to an embodiment of the present invention.

### DESCRIPTION OF EMBODIMENTS

Embodiments of the present invention provide a method for receiving push information and a related apparatus and system, so as to implement information push on the basis of not leaking user information as far as possible, thereby preventing the information push from being greatly limited by a user operation.

The following provides detailed description by using specific embodiments.

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely a part rather than all of the embodiments of the present invention. All other embodiments obtained by a person of ordinary skill in the art based on the embodiments of the present invention without creative efforts shall fall within the protection scope of the present invention.

In the specification, claims, and accompanying drawings of the present invention, the terms "first", "second", "third", "fourth", and so on are intended to distinguish between different objects rather than indicating a specific order. Moreover, the terms "include", "contain" and any other variants mean to cover the non-exclusive inclusion. For example, a process, method, system, product, or device that includes a list of steps or units is not necessarily limited to those steps or units, but may optionally further include other steps or units not expressly listed or inherent to such a process, method, product, or device.

An embodiment of the present invention provides an information push system 100. Referring to FIG. 1-a, the information push system 100 may include: a network access point 02, a push server 03, and at least one terminal 01, and further includes a wireless local area network (WLAN, Wireless Local Area Network) access hotspot 05.

The at least one terminal 01 (n terminals are used as an example for description in FIG. 1) may access a network by using the network access point 02.

The network access point 02 can provide a network access service for the terminal. The network access point 02 may, for example, be a wireless local area network (WLAN, Wireless Local Area Network) access hotspot (which may also be referred to as a WiFi router). Certainly, the network access point 02 may also be a network access point that can provide a network access service for the terminal, for example, a base station in a mobile communications network.

The push server 03 can provide an upper-layer network service, such as a printer service or a push service.

The terminal 01 in this embodiment of the present invention may connect to the push server 03 by using the WLAN access hotspot 05, and accept a push service or the like provided by the push server 03. A merchant may deploy multiple WLAN access hotspots 05 separately connected to one same push server 03.

In some embodiments of the present invention, the network access point 02 may be configured to send information about a network access interface to the terminal 01, where the information about the network access interface includes address information of the push server and access information of the WLAN access hotspot 05. The terminal may access the WLAN access hotspot 05 based on the access information of the WLAN access hotspot 05, where the wireless local area network access hotspot 05 is different from the network access point 02.

The terminal 01 may be configured to receive the information about the network access interface sent by the network access point 02; acquire the address information of the push server 03 included in the information about the network access interface; access the WLAN access hotspot 05 based on the access information of the WLAN access hotspot 05; establish a push connection channel between the terminal 01 and the push server 03 according to the address information of the push server 03 by using the WLAN access hotspot 05; and receive, by using the established push connection channel, push information sent by the push server 03.

The push server 03 may be configured to: after the push connection channel between the push server 03 and the terminal 01 is established, send the push information to the terminal 01 by using the established push connection channel. For example, after receiving a request that is for establishing a push connection channel and sent by the terminal 01 by using the WLAN access hotspot 05, the push server 03 may establish the push connection channel between the push server 03 and the terminal 01; and send push information to the terminal 03 by using the established push connection channel.

In some embodiments of the present invention, the network access point 02 may be configured to actively send the information about the network access interface to the terminal 01. Alternatively, the network access point 02 may be configured to: after receiving a network access interface acquiring request from the terminal 01, send, to the terminal 01, the information about the network access interface used to respond to the network access interface acquiring request.

In some embodiments of the present invention, in terms of the accessing the WLAN access hotspot 05 based on the access information of the WLAN access hotspot 05; and establishing a push connection channel between the terminal 01 and the push server 03 according to the address information of the push server 03 by using the WLAN access hotspot 05, the terminal 01 may be specifically configured to: when receiving a first user instruction, access the WLAN access hotspot based on the access information of the WLAN access hotspot 05; and establish the push connection channel between the terminal 01 and the push server 03 according to the address information of the push server 03 by using the WLAN access hotspot 05, where the first user instruction is used to instruct the terminal 01 to access the WLAN access hotspot 05.

In some embodiments of the present invention, in terms of the accessing the WLAN access hotspot 05 based on the access information of the WLAN access hotspot 05; and establishing a push connection channel between the terminal 01 and the push server 03 according to the address information of the push server 03 by using the WLAN access hotspot 05, the terminal 01 may be specifically configured to: when receiving a second user instruction, access the WLAN access hotspot based on the access information of the WLAN access hotspot 05; and establish the push connection channel between the terminal 01 and the push server 03 according to the address information of the push server 03 by using the WLAN access hotspot 05, where the second user instruction is used to instruct the terminal 01 to connect to the push server 03.

In some embodiments of the present invention, the terminal 01 may be provided with a push client. In terms of the establishing a push connection channel between the terminal 01 and the push server 03 according to the address information of the push server 03 by using the WLAN access hotspot 05, the push client of the terminal 01 may be configured to establish the push connection channel between the terminal 01 and the push server 03 according to the address information of the push server 03 by using the WLAN access hotspot 05.

In terms of the receiving, by using the established push connection channel, push information sent by the push server 03, the push client in the terminal 01 may further be configured to receive, by using the established push connection channel, the push information sent by the push server 03.

Further, referring to FIG. 1-b, the information push system 100 may further include a content provider client 04.

The content provider (Provider) client 04 may be considered as a terminal of the merchant, where the content provider client 04 may be directly connected to the push server 03, and the content provider client 04 may set service information provided by the push server 03. In this way, the merchant can provide various information for the push server 03 by using the content provider client 04, and finally implement push of various information to the terminal 01, for example, advertisement information and discount preferential information of the merchant. Specifically, the content provider client 04 may be configured to send push information to the push server 03; and/or, the content provider client 04 may be configured to choose to connect to at least one terminal 01 of the push server 03, and notify the push server 03 of information of the selected terminal 01, so that the push server 03 pushes the push information to the selected terminal 01.

It can be seen that, in the technical solution of this embodiment, after receiving information about a network access interface that is sent by a network access point and includes address information of a push server 03 and access information of a WLAN access hotspot 05, a terminal 01 acquires the address information of the push server 03 included in the information about the network access interface, accesses the WLAN access hotspot based on the access information of the WLAN access hotspot 05, establishes a push connection channel between the terminal 01 and the push server 03 according to the acquired address information of the push server 03 by using the WLAN access hotspot, and then receives, by using the established push connection channel, push information sent by the push server 03. In this way, because the terminal 01 can acquire the address information of the push server 03 from the received information about the network access interface, even if the terminal 01 exits a display of the network access interface, the terminal 01 can still establish the push connection channel between the terminal 01 and the push server 03 according to the acquired address information of the push server 03 by using the WLAN access hotspot 05, and then receive information pushed by the push server 03, that is, a process of pushing information is not limited by the display of the network access interface operated by the user; and because the terminal 01 can actively initiate establishment of the push connection channel between the terminal 01 and the push server 03 according to the address information of the push server 03, in the process of pushing information, the push server 03 does not need to acquire user information to push information according to the user information. In conclusion, in the foregoing solution of this embodiment of the present invention, information push can be implemented on the basis that user information does not need to be acquired, so that the information push is not limited by a user operation as far as possible, and possibility of leakage of the user information is decreased.

It can be understood that, because the terminal 01 establishes the push connection channel between the terminal 01 and the push server 03 according to the address information of the push server 03 by using the wireless local area network access hotspot 05 corresponding to the access information that is included in the information about the network access interface, the push connection channel is valid only when the terminal 01 is located in coverage of the wireless local area network access hotspot 05 corresponding to the access information that is included in the information about the network access interface. Therefore, only when the terminal 01 is located in the coverage of the wireless local area network access hotspot 05 corresponding to the access information that is included in the information about the network access interface, the terminal 01 can receive preferential information, such as a discount, sent by the corresponding push server 03 (when the terminal 01 is not located in the coverage of the wireless local area network access hotspot 05 corresponding to the access information that is included in the information about the network access interface, the preferential information, such as a discount, sent by the corresponding push server 03 may be generally considered as invalid information for a user), thereby helping to greatly reduce invalid information received by the terminal 01. Because a part of the push connection channel is borne by the wireless local area network, this also helps to decrease data traffic tariff consumption of the terminal 01.

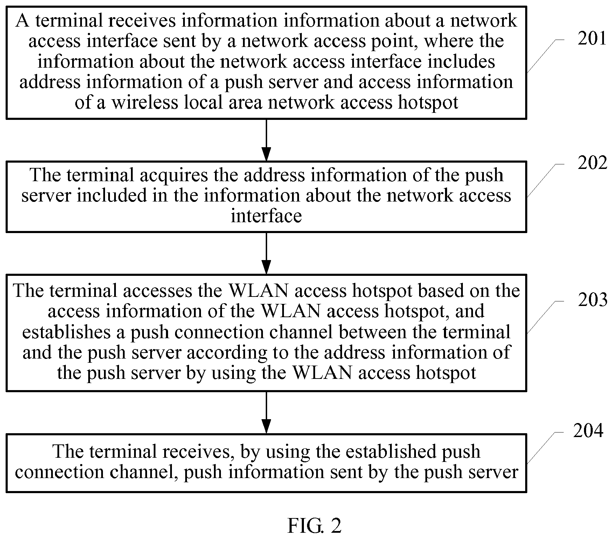

Referring to FIG. 2, FIG. 2 is a schematic flowchart of a method for receiving push information according to an embodiment of the present invention. As shown in FIG. 2, the method for receiving push information according to this embodiment of the present invention includes the following content:
201: A terminal receives information about a network access interface sent by a network access point, where the information about the network access interface includes address information of a push server and access information of a wireless local area network WLAN access hotspot.

The address information of the push server may, for example, be a uniform/universal resource locator (Uniform/Universal Resource Locator, URL) of the push server, or may be other address information of the push server.

The network access point that sends the information about the network access interface may, for example, provide a network access service for the terminal, where the network access point may, for example, be a WLAN access point. Certainly, the network access point that sends the information about the network access interface may also be a network access point that may provide a network access service for the terminal, such as a base station in a mobile communications network.

It can be understood that the WLAN access hotspot corresponding to the access information that is included in the information about the network access interface is different from the network access point that sends the information about the network access interface.

It can be understood that the network access point may actively send the information about the network access interface to a terminal that enters coverage of the network access point, and the terminal receives the information about the network access interface actively sent by the network access point to the terminal located in the coverage of the network access point. Alternatively, after the terminal sends a network access interface acquiring request to the network access point, the terminal may receive the information about the network access interface used to respond to the network access interface acquiring request and sent by the network access point.

In some embodiments of the present invention, the information about the network access interface may include hidden information and displayed information of the network access interface, where the hidden information may include the address information of the push server, where after the terminal receives the information about the network access interface sent by the network access point, the terminal may display the network access interface according to the information about the network access interface, where the displayed network access interface displays the displayed information. In addition, the hidden information of the network access interface may also not include the address information of the push server, and the displayed information of the network access interface may include the address information of the push server.

The hidden information of the network access interface refers to information that is not displayed on a corresponding network access interface when the terminal displays the network access interface, and the displayed information of the network access interface refers to information that is displayed on the network access interface when the terminal displays the corresponding network access interface.

202: The terminal acquires the address information of the push server included in the information about the network access interface.

Specifically, the terminal may parse the information about the network access interface received in the foregoing step 101, to obtain the address information of the push server included in the information about the network access interface.

Certainly, the terminal may also parse the information about the network access interface to obtain the access information of the WLAN access hotspot included in the information about the network access interface.

203: The terminal accesses the WLAN access hotspot based on the access information of the WLAN access hotspot, and establishes a push connection channel between the terminal and the push server according to the address information of the push server by using the WLAN access hotspot.

In some embodiments of the present invention, the establishing a push connection channel between the terminal and the push server according to the address information of the push server by using the WLAN access hotspot may, for example, include that: a push client in the terminal may establish the push connection channel between the terminal and the push server according to the address information of the push server by using the WLAN access hotspot.

204: The terminal receives, by using the established push connection channel, push information sent by the push server.

In some embodiments of the present invention, the receiving, by the terminal by using the established push connection channel, push information sent by the push server may include that: the push client in the terminal may receive, by using the established push connection channel, the push information sent by the push server.

It can be seen that, in the technical solution of this embodiment, after receiving information about a network access interface that is sent by a network access point and includes address information of a push server and access information of a WLAN access hotspot, a terminal acquires the address information of the push server included in the information about the network access interface, accesses the WLAN access hotspot based on the access information of the WLAN access hotspot, establishes a push connection channel according to the acquired address information of the push server by using the WLAN access hotspot, and then receives, by using the established push connection channel, push information sent by the push server. In this way, because the terminal can acquire the address information of the push server from the received information about the network access interface, even if the terminal exits a display of the network access interface, the terminal can still establish the push connection channel between the terminal and the push server according to the acquired address information of the push server by using the WLAN access hotspot, and then receive information pushed by the push server, that is, a process of pushing information is not limited by the display of the network access interface operated by the user; and because the terminal can actively initiate establishment of the push connection channel between the terminal and the push server according to the address information of the push server, in the process of pushing information, the push server does not need to acquire user information to push information according to the user information. In conclusion, in the foregoing solution of this embodiment of the present invention, information push can be implemented on the basis that user information does not need to be acquired, so that the information push is not limited by a user operation as far as possible, and possibility of leakage of the user information is decreased.

It can be understood that, because the terminal establishes the push connection channel between the terminal and the push server according to the address information of the push server by using the wireless local area network access hotspot corresponding to the access information that is included in the information about the network access interface, the push connection channel is valid only when the terminal is located in coverage of the wireless local area network access hotspot corresponding to the access information that is included in the information about the network access interface. Therefore, only when the terminal is located in the coverage of the wireless local area network access hotspot corresponding to the access information that is included in the information about the network access interface, the terminal can receive preferential information, such as a discount, sent by the corresponding push server (when the terminal is not located in the coverage of the wireless local area network access hotspot corresponding to the access information that is included in the information about the network access interface, the preferential information, such as a discount, sent by the corresponding push server may be generally considered as invalid information for a user), thereby helping to greatly reduce invalid information received by the terminal. Because a part of the push connection channel is borne by the wireless local area network, this also helps to decrease data traffic tariff consumption of the terminal.

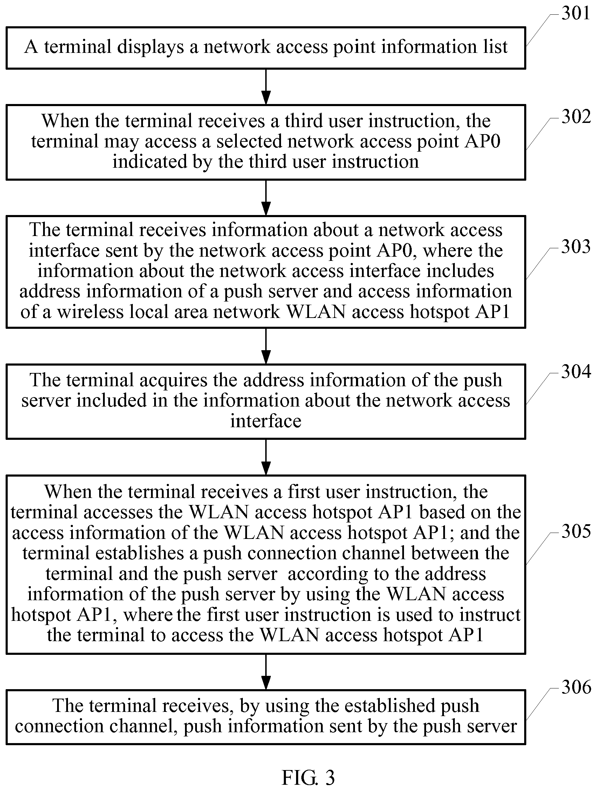

Referring to FIG. 3, FIG. 3 is a schematic flowchart of another method for receiving push information according to another embodiment of the present invention. As shown in FIG. 3, the another method for receiving push information according to the another embodiment of the present invention includes the following content:
301: A terminal displays a network access point information list.

The network access point information list may include information about one or more network access points.

Information about a network access point may include a name of the network access point, information about an area to which the network access point belongs, or information about a merchant to which the network access point belongs, or the like. Specifically, the terminal may search for network access points that can be accessed in a current location, and displays all information about these network access points. Network access point information displayed by the terminal may, for example, be a merchant name, such as "Yipin Coffee", "KFC", and "China World Mall", for a user to select. Certainly, all these network access points are WLAN access hotspots.

302: The terminal receives a third user instruction, where the third user instruction is used to indicate a network access point (which may be referred to as a network access point AP0 in the following for ease of quoting) that is selected by a user from the one or more network access points. When the terminal receives the third user instruction, the terminal may access the selected network access point AP0 indicated by the third user instruction.

Specifically, the terminal initiates, to the selected network access point AP0 indicated by the third user instruction, a network access request to request to access the network access point AP0.

303: The terminal receives information about a network access interface sent by the network access point AP0, where the information about the network access interface includes address information of a push server and access information of a WLAN access hotspot (which may be referred to as a WLAN access hotspot AP1 in the following for ease of quoting).

It can be understood that the WLAN access hotspot AP1 corresponding to the access information that is included in the information about the network access interface is different from the network access point AP0 that sends the information about the network access interface.

In some embodiments of the present invention, the network access point AP0 that is accessed by the terminal may actively send the information about the network access interface to a terminal that enters coverage of the network access point, and the terminal may receive information about one or more network access interfaces actively sent by the network access point AP0 to the terminal located in the coverage of the network access point. Alternatively, after the terminal sends a network access interface acquiring request to the network access point AP0, the terminal may receive information about the one or more network access interfaces used to respond to the network access interface acquiring request and sent by the network access point.

In some embodiments of the present invention, the information about the network access interface may include hidden information and displayed information of the network access interface, where the hidden information may include the address information of the push server, where after the terminal receives the information about the network access interface sent by the network access point AP0, the terminal may display the network access interface according to the information about the network access interface, where the displayed network access interface displays the displayed information. In addition, the hidden information of the network access interface may also not include the address information of the push server, and the displayed information of the network access interface may include the address information of the push server.

The hidden information of the network access interface refers to information that is not displayed on a corresponding network access interface when the terminal displays the network access interface, and the displayed information of the network access interface refers to information that is displayed on the network access interface when the terminal displays the corresponding network access interface.

The displayed information of the network access interface may further include an option label provided for the user to choose whether to connect to the push server (the user may issue, by clicking the option label, an instruction to instruct the terminal to connect to the push server), and the displayed information of the network access interface may further include the access information of the WLAN access hotspot AP1, so that the user accesses the WLAN access hotspot AP1 by using the access information.

Further, the displayed information of the network access interface may further include information about a category of information that can be pushed to the terminal by the push server, where the category may, for example, be advertisement information, preferential discount information, or the like.

304: The terminal acquires the address information of the push server included in the information about the network access interface.

Specifically, the terminal parses the received information about the network access interface to obtain the address information of the push server included in the information about the network access interface.

305: When the terminal receives a first user instruction, the terminal accesses the WLAN access hotspot AP1 based on the access information of the WLAN access hotspot AP1; and the terminal establishes a push connection channel between the terminal and the push server according to the address information of the push server by using the WLAN access hotspot AP1, where the first user instruction is used to instruct the terminal to access the WLAN access hotspot AP1.

Specifically, the establishing, by the terminal, a push connection channel between the terminal and the push server according to the address information of the push server by using the WLAN access hotspot AP1 may include that: a push client in the terminal may establish the push connection channel between the terminal and the push server according to the address information of the push server by using the WLAN access hotspot AP1.

306: The terminal receives, by using the established push connection channel, push information sent by the push server.

Specifically, the receiving, by the terminal by using the established push connection channel, push information sent by the push server may include that: the push client in the terminal may receive, by using the established push connection channel, the push information sent by the push server.

A merchant user may send, to the push server by using a content provider client, push information that needs to be published; in addition, the merchant user may further select, by using the content provider client, some terminals connected to the push server, and notify the push server of information about the selected terminals, and then the push server may only push the push information to the terminals selected by the merchant user.

It can be understood that, because the terminal establishes the push connection channel between the terminal and the push server according to the address information of the push server by using the wireless local area network access hotspot corresponding to the access information that is included in the information about the network access interface, the push connection channel is valid only when the terminal is located in coverage of the wireless local area network access hotspot corresponding to the access information that is included in the information about the network access interface. Therefore, only when the terminal is located in the coverage of the wireless local area network access hotspot corresponding to the access information that is included in the information about the network access interface, the terminal can receive preferential information, such as a discount, sent by the corresponding push server (when the terminal is not located in the coverage of the wireless local area network access hotspot corresponding to the access information that is included in the information about the network access interface, the preferential information, such as a discount, sent by the corresponding push server may be generally considered as invalid information for a user), thereby helping to greatly reduce invalid information received by the terminal. Because a part of the push connection channel is borne by the wireless local area network, this also helps to decrease data traffic tariff consumption of the terminal.

It can be seen that, in the technical solution of this embodiment, after receiving information about a network access interface that is sent by a network access point and includes address information of a push server and access information of a WLAN access hotspot, a terminal acquires the address information of the push server included in the information about the network access interface, accesses the WLAN access hotspot based on the access information of the WLAN access hotspot, establishes a push connection channel according to the acquired address information of the push server by using the WLAN access hotspot, and then receives, by using the established push connection channel, push information sent by the push server. In this way, because the terminal can acquire the address information of the push server from the received information about the network access interface, even if the terminal exits a display of the network access interface, the terminal can still establish the push connection channel between the terminal and the push server according to the acquired address information of the push server by using the WLAN access hotspot, and then receive information pushed by the push server, that is, a process of pushing information is not limited by the display of the network access interface operated by the user; and because the terminal can actively initiate establishment of the push connection channel between the terminal and the push server according to the address information of the push server, in the process of pushing information, the push server does not need to acquire user information to push information according to the user information. In conclusion, in the foregoing solution of this embodiment of the present invention, information push can be implemented on the basis that user information does not need to be acquired, so that the information push is not limited by a user operation as far as possible, and possibility of leakage of the user information is decreased.

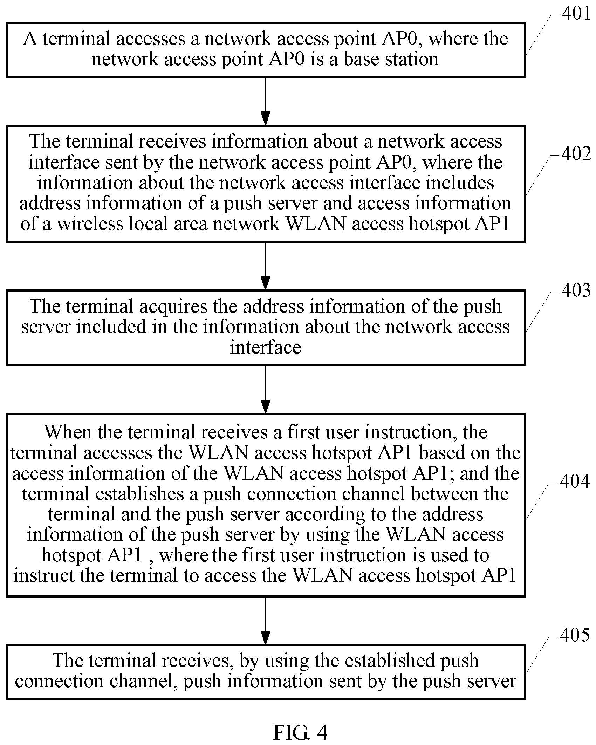

Referring to FIG. 4, FIG. 4 is a schematic flowchart of another method for receiving push information according to another embodiment of the present invention. As shown in FIG. 4, the another method for receiving push information according to the another embodiment of the present invention includes the following content:
401: A terminal accesses a network access point, where the network access point (which may be referred to as a network access point AP0 in the following for ease of quoting) is a base station.
402: The terminal receives information about a network access interface sent by the network access point AP0, where
   the information about the network access interface includes address information of a push server and access information of a WLAN access hotspot (which may be referred to as a WLAN access hotspot AP1).

It can be understood that the WLAN access hotspot AP1 corresponding to the access information that is included in the information about the network access interface is different from the network access point AP0 that sends the information about the network access interface.

In some embodiments of the present invention, the network access point AP0 that is accessed by the terminal may actively send the information about the network access interface to a terminal that enters coverage of the network access point, and the terminal may receive the information about the network access interface actively sent by the network access point AP0 to the terminal located in the coverage of the network access point. Alternatively, after the terminal sends a network access interface acquiring request to the network access point AP0, the terminal may receive the information about the network access interface used to respond to the network access interface acquiring request and sent by the network access point.

In some embodiments of the present invention, the information about the network access interface may include hidden information and displayed information of the network access interface, where the hidden information may include the address information of the push server, where after the terminal receives the information about the network access interface sent by the network access point AP0, the terminal may display the network access interface according to the information about the network access interface, where the displayed network access interface displays the displayed information. In addition, the hidden information of the network access interface may also not include the address information of the push server, and the displayed information of the network access interface may include the address information of the push server.

The hidden information of the network access interface refers to information that is not displayed on a corresponding network access interface when the terminal displays the network access interface, and the displayed information of the network access interface refers to information that is displayed on the network access interface when the terminal displays the corresponding network access interface.

The displayed information of the network access interface may further include an option label provided for the user to choose whether to connect to the push server (a user may issue, by clicking the option label, an instruction to instruct the terminal to connect to the push server), and the displayed information of the network access interface may further include the access information of the WLAN access hotspot AP1, so that the user accesses the WLAN access hotspot AP1 by using the access information.

Further, the displayed information of the network access interface may further include information about a category of information that can be pushed to the terminal by the push server, where the category may, for example, be advertisement information, preferential discount information, or the like.

403: The terminal acquires the address information of the push server included in the information about the network access interface.

Specifically, the terminal parses the received information about the network access interface to obtain the address information of the push server included in the information about the network access interface.

404: When the terminal receives a first user instruction, the terminal accesses the WLAN access hotspot AP1 based on the access information of the WLAN access hotspot AP1; and the terminal establishes a push connection channel between the terminal and the push server according to the address information of the push server by using the WLAN access hotspot AP1, where the first user instruction is used to instruct the terminal to access the WLAN access hotspot AP1.

Specifically, the establishing, by the terminal, a push connection channel between the terminal and the push server according to the address information of the push server by using the WLAN access hotspot AP1 may include that: a push client in the terminal may establish the push connection channel between the terminal and the push server according to the address information of the push server by using the WLAN access hotspot AP1.

405: The terminal receives, by using the established push connection channel, push information sent by the push server.

Specifically, the receiving, by the terminal by using the established push connection channel, push information sent by the push server may include that: the push client in the terminal may receive, by using the established push connection channel, the push information sent by the push server.

A merchant user may send, to the push server by using a content provider client, push information that needs to be published; in addition, the merchant user may further select, by using the content provider client, some terminals connected to the push server, and notify the push server of information about the selected terminals, and then the push server may only push the push information to the terminals selected by the merchant user.

It can be understood that, because the terminal establishes the push connection channel between the terminal and the push server according to the address information of the push server by using the wireless local area network access hotspot corresponding to the access information that is included in the information about the network access interface, the push connection channel is valid only when the terminal is located in coverage of the wireless local area network access hotspot corresponding to the access information that is included in the information about the network access interface. Therefore, only when the terminal is located in the coverage of the wireless local area network access hotspot corresponding to the access information that is included in the information about the network access interface, the terminal can receive preferential information, such as a discount, sent by the corresponding push server (when the terminal is not located in the coverage of the wireless local area network access hotspot corresponding to the access information that is included in the information about the network access interface, the preferential information, such as a discount, sent by the corresponding push server may be generally considered as invalid information for a user), thereby helping to greatly reduce invalid information received by the terminal. Because a part of the push connection channel is borne by the wireless local area network, this also helps to decrease data traffic tariff consumption of the terminal.

It can be seen that, in the technical solution of this embodiment, after receiving information about a network access interface that is sent by a network access point and includes address information of a push server and access information of a WLAN access hotspot, a terminal acquires the address information of the push server included in the information about the network access interface, accesses the WLAN access hotspot based on the access information of the WLAN access hotspot, establishes a push connection channel according to the acquired address information of the push server by using the WLAN access hotspot, and then receives, by using the established push connection channel, push information sent by the push server. In this way, because the terminal can acquire the address information of the push server from the received information about the network access interface, even if the terminal exits a display of the network access interface, the terminal can still establish the push connection channel between the terminal and the push server according to the acquired address information of the push server by using the WLAN access hotspot, and then receive information pushed by the push server, that is, a process of pushing information is not limited by the display of the network access interface operated by the user; and because the terminal can actively initiate establishment of the push connection channel between the terminal and the push server according to the address information of the push server, in the process of pushing information, the push server does not need to acquire user information to push information according to the user information. In conclusion, in the foregoing solution of this embodiment of the present invention, information push can be implemented on the basis that user information does not need to be acquired, so that the information push is not limited by a user operation as far as possible, and possibility of leakage of the user information is decreased.

As shown in FIG. 5-a, an embodiment of the present invention further provides a terminal 500, which may include:
an interaction unit 510, an acquiring unit 520, a channel establishing unit 530, and a transmitting unit 540.

The interaction unit 510 is configured to receive information about a network access interface sent by a network access point, where the information about the network access interface includes address information of a push server and access information of a wireless local area network WLAN access hotspot.

The acquiring unit 520 is configured to acquire the address information of the push server included in the information about the network access interface.

The channel establishing unit 530 is configured to access the WLAN access hotspot based on the access information of the WLAN access hotspot, and establish a push connection channel between the terminal and the push server according to the address information of the push server by using the WLAN access hotspot.

The transmitting unit 540 is configured to receive, by using the established push connection channel, push information sent by the push server.

In some embodiments of the present invention, the interaction unit 510 is specifically configured to receive the information about the network access interface actively sent by the network access point to the terminal 500 located in coverage of the network access point.

Alternatively, the interaction unit 510 is specifically configured to: after sending a network access interface acquiring request to the network access point, receive the information about the network access interface used to respond to the network access interface acquiring request and sent by the network access point.

Referring to FIG. 5-b, in some embodiments of the present invention, the information about the network access interface includes hidden information and displayed information of the network access interface, and the hidden information includes the address information of the push server, where
the terminal 500 may further include: a display unit 550, configured to: after the interaction unit 510 receives the information about the network access interface sent by the network access point, display the network access interface according to the information about the network access interface, where the displayed network access interface displays the displayed information.

In some embodiments of the present invention, the displayed information includes an option label provided for a user to choose whether to connect to the push server. In this scenario, the display unit 550 may display the option label on the network access interface, so that the user chooses whether to connect to the push server.

In some embodiments of the present invention, the channel establishing unit 530 is specifically configured to: when the terminal receives a first user instruction, access, by the terminal, the WLAN access hotspot based on the access information of the WLAN access hotspot, and establish the push connection channel between the terminal and the push server according to the address information of the push server by using the WLAN access hotspot, where the first user instruction is used to instruct the terminal to access the wireless local area network access hotspot.

In some embodiments of the present invention, the channel establishing unit 530 is specifically configured to: when the terminal receives a second user instruction, access, by the terminal, the WLAN access hotspot based on the access information of the WLAN access hotspot, and establish the push connection channel between the terminal and the push server according to the address information of the push server by using the WLAN access hotspot, where the second user instruction is used to instruct the terminal to connect to the push server.

It can be understood that, because the terminal 500 establishes the push connection channel between the terminal 500 and the push server according to the address information of the push server by using the wireless local area network access hotspot corresponding to the access information that is included in the information about the network access interface, the push connection channel is valid only when the terminal 500 is located in coverage of the wireless local area network access hotspot corresponding to the access information that is included in the information about the network access interface. Therefore, only when the terminal 500 is located in the coverage of the wireless local area network access hotspot corresponding to the access information that is included in the information about the network access interface, the terminal 500 can receive preferential information, such as a discount, sent by the corresponding push server (when the terminal 500 is not located in the coverage of the wireless local area network access hotspot corresponding to the access information that is included in the information about the network access interface, the preferential information, such as a discount, sent by the corresponding push server may be generally considered as invalid information for a user), thereby helping to greatly reduce invalid information received by the terminal 500. Because a part of the push connection channel is borne by the wireless local area network, this also helps to decrease data traffic tariff consumption of the terminal 500.

It can be understood that the terminal 500 of this embodiment may be used to implement some or all functions of the terminal in the foregoing method embodiments, where a function of each functional module of the terminal 500 may be specifically implemented according to the methods in the method embodiments described above. For a specific implementation process thereof, reference may be made to the related description in the foregoing method embodiments, and details are not repeatedly described herein.

It can be seen that, in the technical solution of this embodiment, after receiving information about a network access interface that is sent by a network access point and includes address information of a push server and access information of a WLAN access hotspot, the terminal 500 acquires the address information of the push server included in the information about the network access interface, accesses the WLAN access hotspot based on the access information of the WLAN access hotspot, establishes a push connection channel according to the acquired address information of the push server by using the WLAN access hotspot, and then receives, by using the established push connection channel, the push information sent by the push server. In this way, because the terminal can acquire the address information of the push server from the received information about the network access interface, even if the terminal exits a display of the network access interface, the terminal can still establish the push connection channel between the terminal and the push server according to the acquired address information of the push server by using the WLAN access hotspot, and then receive information pushed by the push server, that is, a process of pushing information is not limited by the display of the network access interface operated by the user; and because the terminal can actively initiate establishment of the push connection channel between the terminal and the push server according to the address information of the push server, in the process of pushing information, the push server does not need to acquire user information to push information according to the user information. In conclusion, in the foregoing solution of this embodiment of the present invention, information push can be implemented on the basis that user information does not need to be acquired, so that the information push is not limited by a user operation as far as possible, and possibility of leakage of the user information is decreased.

As shown in FIG. 6, an embodiment of the present invention further provides a terminal 600, which may include: a memory 601 connected to a bus 605, a processor 602, a user interface 603, and a network interface 604.

The memory 601 may be configured to store data that is input from the user interface 603 and the network interface 604; and the memory 601 is connected to the processor 602 in an operable manner, and may store information, such as a necessary file, used for processing data by the processor 602, for example, store information about an operating system run by the processor 602 and an application program such as an installed client, and received notification information, and the like. For example, in some embodiments of the present invention, the memory 601 may store code of a push agent (Push Agent) client. The memory 601 may include a read-only memory (ROM), a random access memory (RAM), a hard disk drive, and the like; some information may stay resident in a removable storage medium and is loaded to or installed in the memory 601 when necessary, where the removable storage medium includes a CD-ROM, a personal computer card (PC-CARD), a storage card, a floppy disk, a tape, a network component, and the like.

The network interface 604 is a port used by the terminal to communicate with another device.

The user interface 603 may include a device externally connected to the terminal, for example, a screen, a keyboard, a mouse, or a printer. Specifically, the user interface 603 in this embodiment specifically includes a touchscreen, a display device, and the like.

The display device may be provided with a graphical user interface (GUI), where the GUI is an easy-to-use user interface provided by the operating system or the application program run by the processor 602, and mainly represents a program, a file, and an operation option by using graphics and images, and a user may select and activate various graphics and images by operating the display device, so as to start a related function and task. A touch pad or the touchscreen may be integrated in the display device or may be a separate component, and may be based on various sensing technologies, including but not limited to capacitive sensing, resistive sensing, surface acoustic wave sensing, pressure sensing, optical sensing, and the like, and the touch pad or touchscreen may be a single-touch or multi-touch touch pad or touch. The network interface 604 may be a wired communications apparatus, for example, an Ethernet interface or an optical fiber interface; or may be a wireless communications apparatus, such as a Wi-Fi wireless network card, a Bluetooth module, or a cellular network communications apparatus.

By invoking the code in the memory 601, the processor 602 may be configured to: receive, based on the network interface 604, information about a network access interface sent by a network access point, where the information about the network access interface includes address information of a push server and access information of a wireless local area network WLAN access hotspot; acquire the address information of the push server included in the information about the network access interface; access the WLAN access hotspot based on the access information of the WLAN access hotspot; establish a push connection channel between the terminal and the push server according to the address information of the push server by using the WLAN access hotspot; and receive, based on the network interface 604 by using the established push connection channel, push information sent by the push server.

In some embodiments of the present invention, in terms of the receiving information about a network access interface sent by a network access point, the processor 602 is specifically configured to receive, based on the network interface 604, the information about the network access interface actively sent by the network access point to the terminal located in coverage of the network access point.

Alternatively, in terms of the receiving information about a network access interface sent by a network access point, the processor 602 is specifically configured to: after sending, based on the network interface 604, a network access interface acquiring request to the network access point, receive, based on the network interface 604, the information about the network access interface used to respond to the network access interface acquiring request and sent by the network access point.

In some embodiments of the present invention, the information about the network access interface includes hidden information and displayed information of the network access interface, where the hidden information includes the address information of the push server, where
the processor 602 is further configured to: after receiving, based on the network interface 604, the information about the network access interface sent by the network access point, display the network access interface according to the information about the network access interface based on the user interface 603, where the displayed network access interface displays the displayed information.

In some embodiments of the present invention, in terms of the accessing the WLAN access hotspot based on the access information of the WLAN access hotspot, and establishing a push connection channel between the terminal and the push server according to the address information of the push server by using the WLAN access hotspot,
the processor 602 is specifically configured to: when receiving a first user instruction based on the user interface 603, access the WLAN access hotspot based on the access information of the WLAN access hotspot, and establish the push connection channel between the terminal and the push server according to the address information of the push server by using the WLAN access hotspot, where the first user instruction is used to instruct the terminal to access the wireless local area network access hotspot.

In some other embodiments of the present invention, in terms of the accessing the WLAN access hotspot based on the access information of the WLAN access hotspot, and establishing a push connection channel between the terminal and the push server according to the address information of the push server by using the WLAN access hotspot,
the processor 602 is specifically configured to: when receiving a second user instruction based on the user interface 603, access the WLAN access hotspot based on the access information of the WLAN access hotspot, and establish the push connection channel between the terminal and the push server according to the address information of the push server by using the WLAN access hotspot, where the second user instruction is used to instruct the terminal to connect to the push server.

It can be understood that, because the terminal 600 establishes the push connection channel between the terminal 600 and the push server according to the address information of the push server by using the wireless local area network access hotspot corresponding to the access information that is included in the information about the network access interface, the push connection channel is valid only when the terminal 600 is located in coverage of the wireless local area network access hotspot corresponding to the access information that is included in the information about the network access interface. Therefore, only when the terminal 600 is located in the coverage of the wireless local area network access hotspot corresponding to the access information that is included in the information about the network access interface, the terminal 600 can receive preferential information, such as a discount, sent by the corresponding push server (when the terminal 600 is not located in the coverage of the wireless local area network access hotspot corresponding to the access information that is included in the information about the network access interface, the preferential information, such as a discount, sent by the corresponding push server may be generally considered as invalid information for a user), thereby helping to greatly reduce invalid information received by the terminal 600. Because a part of the push connection channel is borne by the wireless local area network, this also helps to decrease data traffic tariff consumption of the terminal 600.

It can be understood that the terminal 600 of this embodiment may be used to implement some or all functions of the terminal in the foregoing method embodiments, where a function of each functional component of the terminal 600 may be specifically implemented according to the methods in the method embodiments described above. For a specific implementation process thereof, reference may be made to the related description in the foregoing method embodiments, and details are not repeatedly described herein.

It can be seen that, in the technical solution of this embodiment, after receiving information about a network access interface that is sent by a network access point and includes address information of a push server and access information of a WLAN access hotspot, the terminal 600 acquires the address information of the push server included in the information about the network access interface, accesses the WLAN access hotspot based on the access information of the WLAN access hotspot, establishes a push connection channel according to the acquired address information of the push server by using the WLAN access hotspot, and then receives, by using the established push connection channel, push information sent by the push server. In this way, because the terminal can acquire the address information of the push server from the received information about the network access interface, even if the terminal exits a display of the network access interface, the terminal can still establish the push connection channel between the terminal and the push server according to the acquired address information of the push server by using the WLAN access hotspot, and then receive information pushed by the push server, that is, a process of pushing information is not limited by the display of the network access interface operated by the user; and because the terminal can actively initiate establishment of the push connection channel between the terminal and the push server according to the address information of the push server, in the process of pushing information, the push server does not need to acquire user information to push information according to the user information. In conclusion, in the foregoing solution of this embodiment of the present invention, information push can be implemented on the basis that user information does not need to be acquired, so that the information push is not limited by a user operation as far as possible, and possibility of leakage of the user information is decreased.

The terminal involved in each embodiment of the present invention may be a desktop pad, a laptop pad, or a hand-held computer, or may also be a computing device such as a personal digital assistant (Personal Digital Assistant, PDA), a dedicate media player, a cellular phone, or a consumer electronic device.

The following further describes an information push solution of the present invention by using a specific application scenario, where the terminal in the application scenario may be the foregoing terminal 500 or the foregoing terminal 600.

The terminal obtains information about a network access interface from a network access point (for example, a base station), and the terminal may display information about multiple network access interfaces on the terminal in a categorized manner. For example, as shown in FIG. 7-a and FIG. 7-b, several categories of information about network access interfaces, such as "weather", "calendar", and "preferential coupon", are displayed on a display device of the terminal. When a user selects the preferential coupon, the display device of the terminal may display information about multiple network access interfaces corresponding to the category. The information about the network access interface may include: information about a merchant to which a WLAN access hotspot belongs, and the like, for example, "KFC", "Honeymoon Dessert", and "Yipin Coffee".

When the user selects a network access interface corresponding to "Yipin Coffee", the terminal displays the network access interface of "Yipin Coffee", as shown on the network access interface in FIG. 7-c.

Because hidden information of the network access interface includes address information of a push server, the terminal does not display the address information of the push server on the network access interface, and the network access interface may further display a prompt button that prompts to access a WLAN access hotspot, for example, a "free internet access" button in FIG. 7-c. Some information pushed by the push server may further be displayed, for example, a current price of a fresh fruit strawberry ice-cream and a current price of a durian grapefruit ice-cream.

After the user clicks the "free internet access" button (which is equivalent to that the terminal receives an instruction used to instruct to access the WLAN access hotspot), the terminal accesses the WLAN access hotspot (namely, the WLAN access hotspot corresponding to "Yipin Coffee") based on access information of the WLAN access hotspot included in the information about the network access interface. In addition, the terminal further obtains, by parsing, the address information of the push server included in the information about the network access interface. In this way, according to the address information of the push server obtained by parsing, a push client in the terminal may send, by accessing the WLAN access hotspot, a request for establishing a push connection channel to the push server, and then establishes the push connection channel between the terminal and the push server by accessing the WLAN access hotspot. In this way, the terminal may receive, by using the established push connection channel, push information sent by the push server to the terminal, for example, preferential information of "Yipin Coffee" shown in FIG. 7-d, namely, information "20 Yuan off for purchase of 100 Yuan"; in this case, the user may use the information when the user makes a purchase in the shop. Certainly, the user may also choose to store or ignore the preferential information.

For a merchant user, the merchant user may log in to the push server by using a content provider client, and the content provider client displays information about a terminal that is connected to the push server by using a network access point; the merchant user may select some or all terminals, and notifies the push server of information about the selected terminals by using the content provider client, and sends, by using the content provider client, information that needs to be pushed to the push server; in this way, the push server may selectively push the push information to the terminals.

An embodiment of the present invention further provides a computer storage medium, where the computer storage medium may store a program, and when the program runs, some or all steps of at least one method for receiving push information recorded in the foregoing method embodiments are performed.

In the foregoing embodiments, the description of each embodiment has respective focuses. For a part that is not described in detail in an embodiment, reference may be made to related descriptions in other embodiments.

It should be noted that, for brief description, the foregoing method embodiments are represented as a series of actions. However, a person skilled in the art should appreciate that the present invention is not limited to the described order of the actions, because according to the present invention, some steps may be performed in other orders or simultaneously. In addition, a person skilled in the art should also understand that all the embodiments described in this specification belong to exemplary embodiments, and the involved actions and modules are not necessarily mandatory to the present invention.

In the several embodiments provided in the present application, it should be understood that the disclosed apparatus may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and the parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device, and may specifically be a processor in a computer device) to perform all or a part of the steps of the foregoing methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A method for receiving push information, comprising:
receiving (201), by a terminal, information about a network access interface sent by a network access point, wherein the information about the network access interface comprises address information of a push server and access information of a wireless local area network, WLAN, access hotspot, wherein the wireless local area network access hotspot is different from the network access point;
acquiring (202), by the terminal, the address information of the push server comprised in the information about the network access interface;
accessing (203), by the terminal, the WLAN access hotspot based on the access information of the WLAN access hotspot, and establishing a push connection channel between the terminal and the push server according to the address information of the push server by using the WLAN access hotspot; and
receiving (204), by the terminal by using the established push connection channel, push information sent by the push server.

2. The method according to claim 1, wherein the receiving (201), by a terminal, information about a network access interface sent by a network access point comprises:
receiving, by the terminal, the information about the network access interface actively sent by the network access point to the terminal located in coverage of the network access point; or,
the receiving, by a terminal, information about a network access interface sent by a network access point comprises: after the terminal sends a network access interface acquiring request to the network access point, receiving, by the terminal, the information about the network access interface used to respond to the network access interface acquiring request and sent by the network access point.

3. The method according to claim 1 or 2, wherein the information about the network access interface comprises hidden information and displayed information of the network access interface, wherein the hidden information comprises the address information of the push server, wherein after the receiving, by a terminal, information about a network access interface sent by a network access point, the method further comprises: displaying, by the terminal, the network access interface according to the information about the network access interface, wherein the displayed network access interface displays the displayed information.

4. The method according to claim 3, wherein the displayed information comprises an option label provided for a user to choose whether to connect to the push server.

5. The method according to any one of claims 1 to 4, wherein the accessing, by the terminal, the WLAN access hotspot based on the access information of the WLAN access hotspot, and establishing a push connection channel between the terminal and the push server according to the address information of the push server by using the WLAN access hotspot comprises: when the terminal receives a first user instruction, accessing, by the terminal, the WLAN access hotspot based on the access information of the WLAN access hotspot, and establishing the push connection channel between the terminal and the push server according to the address information of the push server by using the WLAN access hotspot, wherein the first user instruction is used to instruct the terminal to access the wireless local area network access hotspot.

6. The method according to any one of claims 1 to 4, wherein the accessing, by the terminal, the WLAN access hotspot based on the access information of the WLAN access hotspot, and establishing a push connection channel between the terminal and the push server according to the address information of the push server by using the WLAN access hotspot comprises: when the terminal receives a second user instruction, accessing the WLAN access hotspot based on the access information of the WLAN access hotspot, and establishing the push connection channel between the terminal and the push server according to the address information of the push server by using the WLAN access hotspot, wherein the second user instruction is used to instruct the terminal to connect to the push server.

7. The method according to any one of claims 1 to 6, wherein:
the establishing (203), by the terminal, a push connection channel between the terminal and the push server according to the address information of the push server by using the WLAN access hotspot comprises: establishing, by a push client in the terminal, the push connection channel between the terminal and the push server according to the address information of the push server by using the WLAN access hotspot; and
the receiving (204), by the terminal by using the established push connection channel, push information sent by the push server comprises: receiving, by the push client in the terminal by using the established push connection channel, the push information sent by the push server.

8. A terminal(500), comprising:
an interaction unit (510), configured to receive information about a network access interface sent by a network acces point, wherein the information about the network access interface comprises address information of a push server and access information of a wireless local area network WLAN access hotspot, wherein the wireless local area network access hotspot is different from the network access point;
an acquiring unit (520), configured to acquire the address information of the push server comprised in the information about the network access interface;
a channel establishing unit (530), configured to access the WLAN access hotspot based on the access information of the WLAN access hotspot, and establish a push connection channel between the terminal and the push server according to the address information of the push server by using the WLAN access hotspot; and
a transmitting unit (540), configured to receive, by using the established push connection channel, push information sent by the push server.

9. The terminal (500) according to claim 8, wherein the interaction unit (510) is specifically configured to:
receive the information about the network access interface actively sent by the network access point to the terminal located in coverage of the network access point; or
the interaction unit is specifically configured to: after sending a network access interface acquiring request to the network access point, receive the information about the network access interface used to respond to the network access interface acquiring request and sent by the network access point.

10. The terminal (500) according to claim 8 or 9, wherein the information about the network access interface comprises hidden information and displayed information of the network access interface, and the hidden information comprises the address information of the push server, wherein
the terminal (500) further comprises:
a display unit (550), configured to: after the interaction unit receives the information about the network access interface sent by the network access point, display the network access interface according to the information about the network access interface, wherein the displayed network access interface displays the displayed information.

11. The terminal (500) according to claim 10, wherein the displayed information comprises an option label provided for a user to choose whether to connect to the push server.

12. The terminal according to any one of claims 8 to 11, wherein the channel establishing unit is specifically configured to: when the terminal receives a first user instruction, access, by the terminal, the WLAN access hotspot based on the access information of the WLAN access hotspot, and establish the push connection channel between the terminal and the push server according to the address information of the push server by using the WLAN access hotspot, wherein the first user instruction is used to instruct the terminal to access the wireless local area network access hotspot.

13. The terminal according to any one of claims 8 to 11, wherein:
the channel establishing unit is specifically configured to: when the terminal receives a second user instruction, access the WLAN access hotspot based on the access information of the WLAN access hotspot, and establish the push connection channel between the terminal and the push server according to the address information of the push server by using the WLAN access hotspot, wherein the second user instruction is used to instruct the terminal to connect to the push server.

14. An information push system (100), comprising:
a network access point (02), configured to send information about a network access interface to a terminal (01), wherein the information about the network access interface comprises address information of a push server (03) and access information of a wireless local area network WLAN access hotspot (05), wherein the wireless local area network access hotspot is different from the network access point;
the terminal (01), configured to receive the information about the network access interface sent by the network access point (02); acquire the address information of the push server (03) comprised in the information about the network access interface; access the WLAN access hotspot (05) based on the access information of the WLAN access hotspot (05); establish a push connection channel between the terminal (01) and the push server (03) according to the address information of the push server (03) by using the WLAN access hotspot (05); and receive, by using the established push connection channel, push information sent by the push server (03); and
the push server (03), configured to: after the push connection channel between the push server (03) and the terminal (01) is established, send the push information to the terminal (01) by using the established push connection channel.

15. The information push system (100) according to claim 14, wherein the terminal (01) is the terminal (500) according to any one of claims 8 to 13.

16. A computer storage medium, wherein the computer storage medium stores a program, wherein when the program runs, the steps according to any one of claims 1 to 7 are performed.

## Patentansprüche

1. Verfahren zum Empfangen von Push-Informationen, umfassend:
Empfangen (201), durch ein Endgerät, von durch einen Netzwerkzugangspunkt gesendeten Informationen über eine Netzwerkzugangsschnittstelle, wobei die Informationen über die Netzwerkzugangsschnittstelle Adressinformationen eines Push-Servers und Zugangsinformationen eines Zugangs-Hotspots eines drahtlosen lokalen Netzwerks (WLAN) umfassen, wobei der Zugangs-Hotspot eines drahtlosen lokalen Netzwerks von dem Netzwerkzugangspunkt verschieden ist;
Erfassen (202), durch das Endgerät, der Adressinformationen des Push-Servers, die in den Informationen über die Netzwerkzugangsschnittstelle enthalten sind;
Zugreifen (203), durch das Endgerät, auf den WLAN-Zugangs-Hotspot basierend auf den Zugangsinformationen des WLAN-Zugangs-Hotspots und Einrichten eines Push-Verbindungs-Kanals zwischen dem Endgerät und dem Push-Server gemäß den Adressinformationen des Push-Servers durch Verwenden des WLAN-Zugangs-Hotspots; und
Empfangen (204), durch das Endgerät, durch Verwenden des eingerichteten Push-Verbindungs-Kanals, von durch den Push-Server gesendeten Push-Informationen.

2. Verfahren nach Anspruch 1, wobei das Empfangen (201), durch ein Endgerät, von durch den Netzwerkzugangspunkt gesendeten Informationen über eine Netzwerkzugangsschnittstelle Folgendes umfasst:
Empfangen, durch das Endgerät, der Informationen über die Netzwerkzugangsschnittstelle, die durch den Netzwerkzugangspunkt aktiv zu dem Endgerät gesendet werden, das sich innerhalb der Reichweite des Netzwerkzugangspunkts befindet; oder
das Empfangen, durch ein Endgerät, von durch einen Netzwerkzugangspunkt gesendeten Informationen über eine Netzwerkzugangsschnittstelle Folgendes umfasst: nachdem das Endgerät eine Netzwerkzugangsschnittstellenerfassungsanforderung zu dem Netzwerkzugangspunkt sendet, Empfangen, durch das Endgerät, der Informationen über die Netzwerkzugangsschnittstelle, die verwendet werden, um auf die Netzwerkzugangsschnittstellenerfassungsanforderung zu antworten, und die durch den Netzwerkzugangspunkt gesendet wurden.

3. Verfahren nach Anspruch 1 oder 2, wobei die Informationen über die Netzwerkzugangsschnittstelle ausgeblendete Informationen und angezeigte Informationen der Netzwerkzugangsschnittstelle umfassen, wobei die ausgeblendeten Informationen die Adressinformationen des Push-Servers umfassen, wobei nach dem Empfangen, durch ein Endgerät, von Informationen über eine Netzwerkzugangsschnittstelle, die durch einen Netzwerkzugangspunkt gesendet wurden, das Verfahren ferner Folgendes umfasst: Anzeigen, durch das Endgerät, der Netzwerkzugangsschnittstelle gemäß den Informationen über die Netzwerkzugangsschnittstelle, wobei die angezeigte Netzwerkzugangsschnittstelle die angezeigten Informationen anzeigt.

4. Verfahren nach Anspruch 3, wobei die angezeigten Informationen ein Optionsetikett umfassen, das bereitgestellt wird, sodass ein Benutzer auswählen kann, ob eine Verbindung zum Push-Server hergestellt werden soll.

5. Verfahren nach einem der Ansprüche 1 bis 4, wobei das Zugreifen, durch das Endgerät, auf den WLAN-Zugangs-Hotspot basierend auf den Zugangsinformationen des WLAN-Zugangs-Hotspots und das Einrichten eines Push-Verbindungs-Kanals zwischen dem Endgerät und dem Push-Server gemäß den Adressinformationen des Push-Servers durch Verwenden des WLAN-Zugangs-Hotspots Folgendes umfasst: wenn das Endgerät eine erste Benutzeranweisung empfängt, Zugreifen, durch das Endgerät, auf den WLAN-Zugangs-Hotspot basierend auf den Zugangsinformationen des WLAN-Zugangs-Hotspots und Einrichten des Push-Verbindungs-Kanals zwischen dem Endgerät und dem Push-Server gemäß den Adressinformationen des Push-Servers durch Verwenden des Zugangs-Hotspots, wobei die erste Benutzeranweisung verwendet wird, um das Endgerät anzuweisen, auf den Zugangs-Hotspot eines drahtlosen lokalen Netzwerks zuzugreifen.

6. Verfahren nach einem der Ansprüche 1 bis 4, wobei das Zugreifen, durch das Endgerät, auf den WLAN-Zugangs-Hotspot basierend auf den Zugangsinformationen des WLAN-Zugangs-Hotspots und das Einrichten eines Push-Verbindungs-Kanals zwischen dem Endgerät und dem Push-Server gemäß den Adressinformationen des Push-Servers durch Verwenden des WLAN-Zugangs-Hotspots Folgendes umfasst: wenn das Endgerät eine zweite Benutzeranweisung empfängt, Zugreifen auf den WLAN-Zugangs-Hotspot basierend auf den Zugangsinformationen des WLAN-Zugangs-Hotspots und Einrichten des Push-Verbindungs-Kanals zwischen dem Endgerät und dem Push-Server gemäß den Adressinformationen des Push-Servers durch Verwenden des WLAN-Zugangs-Hotspots, wobei die zweite Benutzeranweisung verwendet wird, um das Endgerät anzuweisen, eine Verbindung zu dem Push-Server herzustellen.

7. Verfahren nach einem der Ansprüche 1 bis 6, wobei:
das Einrichten (203), durch das Endgerät, eines Push-Verbindungs-Kanals zwischen dem Endgerät und dem Push-Server gemäß den Adressinformationen des Push-Servers durch Verwenden des WLAN-Zugangs-Hotspots Folgendes umfasst: Einrichten, durch einen Push-Client in dem Endgerät, des Push-Verbindungs-Kanals zwischen dem Endgerät und dem Push-Server gemäß den Adressinformationen des Push-Servers durch Verwenden des WLAN-Zugangs-Hotspots; und
das Empfangen (204), durch das Endgerät, durch Verwenden des eingerichteten Push-Verbindungs-Kanals, von durch den Push-Server gesendeten Push-Informationen Folgendes umfasst: Empfangen, durch den Push-Client in dem Endgerät, durch Verwenden des eingerichteten Push-Verbindungs-Kanals, der durch den Push-Server gesendeten Push-Informationen.

8. Endgerät (500), umfassend:
eine Interaktionseinheit (510), die zum Empfangen von durch einen Netzwerkzugangspunkt gesendeten Informationen über eine Netzwerkzugangsschnittstelle ausgelegt ist, wobei die Informationen über die Zugangsschnittstelle Adressinformationen eines Push-Servers und Zugangsinformationen eines Zugangs-Hotspots eines drahtlosen lokalen Netzwerks (WLAN) umfassen, wobei der Zugangs-Hotspot eines drahtlosen lokalen Netzwerks von dem Netzwerkzugangspunkt verschieden ist;
eine Erfassungseinheit (520), die dazu ausgelegt ist, die in den Informationen über die Netzwerkzugangsschnittstelle enthaltenen Adressinformationen des Push-Servers zu erfassen;
eine Kanaleinrichtungseinheit (530), die dazu ausgelegt ist, basierend auf den Zugangsinformationen des Zugangs-Hotspots auf den WLAN-Zugangs-Hotspot zuzugreifen und einen Push-Verbindungs-Kanal zwischen dem Endgerät und dem Push-Server gemäß den Adressinformationen des Push-Servers durch Verwenden des WLAN-Zugangs-Hotspots einzurichten; und
eine Übertragungseinheit (540), die dazu ausgelegt ist, durch Verwenden des eingerichteten Push-Verbindungs-Kanals, durch den Push-Server gesendete Push-Informationen zu empfangen.

9. Endgerät (500) nach Anspruch 8, wobei die Interaktionseinheit (510) insbesondere zu Folgendem ausgelegt ist:
Empfangen der Informationen über die Netzwerkzugangsschnittstelle, die durch den Netzwerkzugangspunkt aktiv zu dem Endgerät gesendet werden, das sich innerhalb der Reichweite des Netzwerkzugangspunkts befindet; oder
die Interaktionseinheit insbesondere zu Folgendem ausgelegt ist: nach dem Senden einer Netzwerkzugangsschnittstellenerfassungsanforderung zu dem Netzwerkzugangspunkt, Empfangen der Informationen über die Netzwerkzugangsschnittstelle, die verwendet werden, um auf die Netzwerkzugangsschnittstellenerfassungsanforderung zu antworten, und die durch den Netzwerkzugangspunkt gesendet wurden.

10. Endgerät (500) nach Anspruch 8 oder 9, wobei die Informationen über die Netzwerkzugangsschnittstelle ausgeblendete Informationen und angezeigte Informationen der Netzwerkzugangsschnittstelle umfassen und die ausgeblendeten Informationen die Adressinformationen des Push-Servers umfassen, wobei das Endgerät (500) ferner Folgendes umfasst:
eine Anzeigeeinheit (550), die zu Folgendem ausgelegt ist: nachdem die Interaktionseinheit die durch den Netzwerkzugangspunkt gesendeten Informationen über die Netzwerkzugangsschnittstelle empfängt, Anzeige der Netzwerkzugangsschnittstelle gemäß den Informationen über die Netzwerkzugangsschnittstelle, wobei die angezeigte Netzwerkzugangsschnittstelle die angezeigten Informationen anzeigt.

11. Endgerät (500) nach Anspruch 10, wobei die angezeigten Informationen ein Optionsetikett umfassen, das bereitgestellt wird, sodass ein Benutzer auswählen kann, ob eine Verbindung zum Push-Server hergestellt werden soll.

12. Endgerät nach einem der Ansprüche 8 bis 11, wobei die Kanaleinrichtungseinheit insbesondere zu Folgendem ausgelegt ist: wenn das Endgerät eine erste Benutzeranweisung empfängt, Zugreifen, durch das Endgerät, auf den WLAN-Zugangs-Hotspot basierend auf den Zugangsinformationen des WLAN-Zugangs-Hotspots und Einrichten des Push-Verbindungs-Kanals zwischen dem Endgerät und dem Push-Server gemäß den Adressinformationen des Push-Servers durch Verwenden des WLAN-Zugangs-Hotspots, wobei die erste Benutzeranweisung verwendet wird, um das Endgerät anzuweisen, auf den Zugangs-Hotspot eines drahtlosen lokalen Netzwerks zuzugreifen.

13. Endgerät nach einem der Ansprüche 8 bis 11, wobei:
die Kanaleinrichtungseinheit insbesondere zu Folgendem ausgelegt ist: wenn das Endgerät eine zweite Benutzeranweisung empfängt, Zugreifen auf den WLAN-Zugangs-Hotspot basierend auf den Zugangsinformationen des WLAN-Zugangs-Hotspots und Einrichten des Push-Verbindungs-Kanals zwischen dem Endgerät und dem Push-Server gemäß den Adressinformationen des Push-Servers durch Verwenden des WLAN-Zugangs-Hotspots, wobei die zweite Benutzeranweisung verwendet wird, um das Endgerät anzuweisen, eine Verbindung zu dem Push-Server herzustellen.

14. Informations-Push-System (100), umfassend:
einen Netzwerkzugangspunkt (02), der dazu ausgelegt ist, Informationen über eine Netzwerkzugangsschnittstelle zu einem Endgerät (01) zu senden, wobei die Informationen über die Netzwerkzugangsschnittstelle Adressinformationen eines Push-Servers (03) und Zugangsinformationen eines Zugangs-Hotspots (05) eines drahtlosen lokalen Netzwerks (WLAN) umfassen, wobei der Zugangs-Hotspot eines drahtlosen lokalen Netzwerks von dem Netzwerkzugangspunkt verschieden ist;
das Endgerät (01), das dazu ausgelegt ist, die durch den Netzwerkzugangspunkt (02) gesendeten Informationen über die Netzwerkzugangsschnittstelle zu empfangen; die in den Informationen über die Netzwerkzugangsschnittstelle enthaltenen Adressinformationen des Push-Servers (03) zu erfassen; basierend auf den Zugangsinformationen des Zugangs-Hotspots (05) auf den WLAN-Zugangs-Hotspot (05) zuzugreifen; einen Push-Verbindungs-Kanal zwischen dem Endgerät (01) und dem Push-Server (03) gemäß den Adressinformationen des Push-Servers (03) durch Verwenden des WLAN-Zugangs-Hotspots (05) einzurichten und, durch Verwenden des eingerichteten Push-Verbindungs-Kanals, durch den Push-Server (03) gesendete Push-Informationen zu empfangen; und
den Push-Server (03), der zu Folgendem ausgelegt ist: nachdem der Push-Verbindungs-Kanal zwischen dem Push-Server (03) und dem Endgerät (01) eingerichtet wird, Senden der Push-Informationen zu dem Endgerät (01) durch Verwenden des eingerichteten Push-Verbindungs-Kanals.

15. Informations-Push-System (100) nach Anspruch 14, wobei das Endgerät (01) das Endgerät (500) nach einem der Ansprüche 8 bis 13 ist.

16. Computerspeichermedium, wobei das Computerspeichermedium ein Programm speichert, wobei, wenn das Programm ausgeführt wird, die Schritte nach einem der Ansprüche 1 bis 7 durchgeführt werden.

## Revendications

1. Procédé de réception d'une information de pousser, consistant à :
recevoir (201), par un terminal, une information sur une interface d'accès à un réseau envoyée par un point d'accès au réseau, l'information sur l'interface d'accès au réseau comprenant une information d'adresse d'un serveur de pousser et une information d'accès d'un point d'accès sans fil à un réseau local sans fil, WLAN, le point d'accès sans fil au réseau local sans fil étant différent du point d'accès au réseau ;
acquérir (202), par le terminal, l'information d'adresse du serveur de pousser comprise dans l'information sur l'interface d'accès au réseau ;
accéder (203), par le terminal, au point d'accès sans fil au WLAN sur la base de l'information d'accès du point d'accès sans fil au WLAN, et établir un canal de connexion de pousser entre le terminal et le serveur de pousser selon l'information d'adresse du serveur de pousser au moyen du point d'accès sans fil au WLAN ; et
recevoir (204), par le terminal au moyen du canal de connexion de pousser établi, à une information de pousser envoyée par le serveur de pousser.

2. Procédé selon la revendication 1, dans lequel la réception (201), par un terminal, d'une information sur une interface d'accès au réseau envoyée par un point d'accès au réseau, consiste à :
recevoir, par le terminal, l'information sur l'interface d'accès au réseau envoyée de manière active par le point d'accès au réseau au terminal située dans la couverture du point d'accès au réseau ; ou
la réception, par un terminal, d'une information sur une interface d'accès au réseau envoyée par un point d'accès au réseau consiste à : après l'envoi, par le terminal, d'une demande d'acquisition d'interface d'accès au réseau au point d'accès au réseau, recevoir, par le terminal, l'information sur l'interface d'accès au réseau utilisée pour répondre à la demande d'acquisition d'interface d'accès au réseau et envoyée par le point d'accès au réseau.

3. Procédé selon la revendication 1 ou 2, dans lequel l'information sur l'interface d'accès au réseau comprend une information masquée et une information affichée de l'interface d'accès au réseau, l'information masquée comprenant l'information d'adresse du serveur de pousser, le procédé consistant en outre, après la réception, par un terminal, d'une information sur une interface d'accès au réseau envoyée par un point d'accès au réseau, à : afficher, par le terminal, l'interface d'accès au réseau selon l'information sur l'interface d'accès au réseau, l'interface d'accès au réseau affichée affichant l'information affichée.

4. Procédé selon la revendication 3, dans lequel l'information affichée comprend une étiquette d'option permettant à un utilisateur de choisir de se connecter ou non au serveur de pousser.

5. Procédé selon l'une quelconque des revendications 1 à 4, dans lequel l'accès, par le terminal, au point d'accès sans fil au WLAN sur la base de l'information d'accès du point d'accès sans fil au WLAN, et l'établissement d'un canal de connexion de pousser entre le terminal et le serveur de pousser selon l'information d'adresse du serveur de pousser au moyen du point d'accès sans fil au WLAN, consistent à : quand le terminal reçoit une première instruction d'utilisateur, accéder, par le terminal, au point d'accès sans fil au WLAN sur la base de l'information d'accès du point d'accès sans fil au WLAN, et établir le canal de connexion de pousser entre le terminal et le serveur de pousser selon l'information d'adresse du serveur de pousser au moyen du point d'accès sans fil au WLAN, la première instruction d'utilisateur étant utilisée pour donner l'instruction au terminal d'accéder au point d'accès sans fil au réseau local sans fil.

6. Procédé selon l'une quelconque des revendications 1 à 4, dans lequel l'accès, par le terminal, au point d'accès sans fil au WLAN sur la base de l'information d'accès du point d'accès sans fil au WLAN, et l'établissement d'un canal de connexion de pousser entre le terminal et le serveur de pousser selon l'information d'adresse du serveur de pousser au moyen du point d'accès sans fil au WLAN, consistent à : quand le terminal reçoit une seconde instruction d'utilisateur, accéder au point d'accès sans fil au WLAN sur la base de l'information d'accès du point d'accès sans fil au WLAN, et établir le canal de connexion de pousser entre le terminal et le serveur de pousser selon l'information d'adresse du serveur de pousser au moyen du point d'accès sans fil au WLAN, la seconde instruction d'utilisateur étant utilisée pour donner l'instruction au terminal de se connecter au serveur de pousser.

7. Procédé selon l'une quelconque des revendications 1 à 6, dans lequel :
l'établissement (203), par le terminal, d'un canal de connexion de pousser entre le terminal et le serveur de pousser selon l'information d'adresse du serveur de pousser au moyen du point d'accès sans fil au WLAN, consiste à : établir, par un client de pousser dans le terminal, le canal de connexion de pousser entre le terminal et le serveur de pousser selon l'information d'adresse du serveur de pousser au moyen du point d'accès sans fil au WLAN ; et
la réception (204), par le terminal au moyen du canal de connexion de pousser établi, d'une information de pousser envoyée par le serveur de pousser, consiste à : recevoir, par le client de pousser dans le terminal au moyen du canal de connexion de pousser établi, l'information de pousser envoyée par le serveur de pousser.

8. Terminal (500), comprenant :
une unité d'interaction (510), configurée pour recevoir une information sur une interface d'accès à un réseau envoyée par un point d'accès au réseau, l'information sur l'interface d'accès au réseau comprenant une information d'adresse d'un serveur de pousser et une information d'accès d'un point d'accès sans fil à un réseau local sans fil WLAN, le point d'accès sans fil au réseau local sans fil étant différent du point d'accès au réseau ;
une unité d'acquisition (520), configurée pour acquérir l'information d'adresse du serveur de pousser comprise dans l'information sur l'interface d'accès au réseau ;
une unité d'établissement de canal (530), configurée pour accéder au point d'accès sans fil au WLAN sur la base de l'information d'accès du point d'accès sans fil au WLAN, et établir un canal de connexion de pousser entre le terminal et le serveur de pousser selon l'information d'adresse du serveur de pousser au moyen du point d'accès sans fil au WLAN ; et
une unité d'émission (540), configurée pour recevoir, au moyen du canal de connexion de pousser établi, à une information de pousser envoyée par le serveur de pousser.

9. Terminal (500) selon la revendication 8, dans lequel l'unité d'interaction (510) est spécifiquement configurée pour :
recevoir l'information sur l'interface d'accès au réseau envoyée de manière active par le point d'accès au réseau au terminal située dans la couverture du point d'accès au réseau ; ou
l'unité d'interaction est spécifiquement configurée pour : après l'envoi d'une demande d'acquisition d'interface d'accès au réseau au point d'accès au réseau, recevoir l'information sur l'interface d'accès au réseau utilisée pour répondre à la demande d'acquisition d'interface d'accès au réseau et envoyée par le point d'accès au réseau.

10. Terminal (500) selon la revendication 8 ou 9, dans lequel l'information sur l'interface d'accès au réseau comprend une information masquée et une information affichée de l'interface d'accès au réseau, l'information masquée comprenant l'information d'adresse du serveur de pousser, le terminal (500) comprenant en outre :
une unité d'affichage (550), configurée pour : après la réception, par l'unité d'interaction, de l'information sur l'interface d'accès au réseau envoyée par le point d'accès au réseau, afficher l'interface d'accès au réseau selon l'information sur l'interface d'accès au réseau, l'interface d'accès au réseau affichée affichant l'information affichée.

11. Terminal (500) selon la revendication 10, dans lequel l'information affichée comprend une étiquette d'option permettant à un utilisateur de choisir de se connecter ou non au serveur de pousser.

12. Terminal selon l'une quelconque des revendications 8 à 11, dans lequel l'unité d'établissement est spécifiquement configurée pour : quand le terminal reçoit une première instruction d'utilisateur, accéder, par le terminal, au point d'accès sans fil au WLAN sur la base de l'information d'accès du point d'accès sans fil au WLAN, et établir le canal de connexion de pousser entre le terminal et le serveur de pousser selon l'information d'adresse du serveur de pousser au moyen du point d'accès sans fil au WLAN, la première instruction d'utilisateur étant utilisée pour donner l'instruction au terminal d'accéder au point d'accès sans fil au réseau local sans fil.

13. Terminal selon l'une quelconque des revendications 8 et 11, dans lequel :
l'unité d'établissement de canal est spécifiquement configurée pour : quand le terminal reçoit une seconde instruction d'utilisateur, accéder au point d'accès sans fil au WLAN sur la base de l'information d'accès du point d'accès sans fil au WLAN, et établir le canal de connexion de pousser entre le terminal et le serveur de pousser selon l'information d'adresse du serveur de pousser au moyen du point d'accès sans fil au WLAN, la seconde instruction d'utilisateur étant utilisée pour donner l'instruction au terminal de se connecter au serveur de pousser.

14. Système de pousser d'informations (100), comprenant :
un point d'accès au réseau (02), configuré pour envoyer une information sur une interface d'accès à un réseau à un terminal (01), l'information sur l'interface d'accès au réseau comprenant une information d'adresse d'un serveur de pousser (03) et une information d'accès d'un point d'accès sans fil à un réseau local sans fil WLAN (05), le point d'accès sans fil au réseau local sans fil étant différent du point d'accès au réseau ;
le terminal (01), configuré pour recevoir l'information sur l'interface d'accès au réseau envoyée par le point d'accès au réseau (02) ; acquérir l'information d'adresse du serveur de pousser (03) comprise dans l'information sur l'interface d'accès au réseau ; accéder au point d'accès sans fil au WLAN (05) sur la base de l'information d'accès du point d'accès sans fil au WLAN (05) ; établir un canal de connexion de pousser entre le terminal (01) et le serveur de pousser (03) selon l'information d'adresse du serveur de pousser (03) au moyen du point d'accès sans fil au WLAN (05) ; et recevoir, au moyen du canal de connexion de pousser établi, à une information de pousser envoyée par le serveur de pousser (03) ; et
le serveur de pousser (03), configuré pour : après l'établissement du canal de connexion de pousser entre le serveur de pousser (03) et le terminal (01), envoyer l'information de pousser au terminal (01) au moyen du canal de connexion de pousser établi.

15. Système de pousser d'informations (100) selon la revendication 14, dans lequel le terminal (01) est le terminal (500) selon l'une quelconque des revendications 8 à 13.

16. Support de stockage informatique, le support de stockage informatique stockant un programme qui, lorsqu'il est exécuté, provoque la réalisation des étapes selon l'une quelconque des revendications 1 à 7.
